# EUROPÄISCHE PATENTSCHRIFT

(11) **EP 1 386 690 B1**
(45) Veröffentlichungstag und Bekanntmachung des Hinweises auf die Patenterteilung: **28.05.2008**
(21) Anmeldenummer: 02017281.3
(22) Anmeldetag: 01.08.2002
(51) Int. Cl.: B23K 26/42, G01N 21/17, B23K 26/12

(54) **Laserbearbeitungsmaschine**
Laser working machine
Machine d'usinage au laser

(43) Veröffentlichungstag der Anmeldung: 04.02.2004
(73) Patentinhaber: TRUMPF Werkzeugmaschinen GmbH + Co. KG, 71254 Ditzingen (DE)
(72) Erfinder: Weick, Jürgen-Michael, 71679 Asberg (DE); Dimter, Marc, 70806 Kornwestheim (DE)
(74) Vertreter: Kohler Schmid Möbus

(56) Entgegenhaltungen:
- EP-A- 0 749 800
- WO-A-95/33594
- DE-A- 19 535 720
- US-A- 4 476 150
- US-A- 4 504 727
- KREUZER L B: "LASER OPTOACOUSTIC SPECTROSCOPY- A NEW TECHNIQUE OF GAS ANALYSIS" ANALYTICAL CHEMISTRY, AMERICAN CHEMICAL SOCIETY. COLUMBUS, US, 1974, Seiten 235A,240A-244A, XP001108812 ISSN: 0003-2700

## Beschreibung

Die Erfindung betrifft eine Laserbearbeitungsmaschine zur Bearbeitung von Werkstücken gemäß dem Oberbegriff des Anspruchs 1. Die US-A-44716 150 offenbart eine solche Bearbeitungsmachine.

Bei einer Laserbearbeitungsmaschine mit einem CO₂-Laser wird die Laserstrahlung zur Materialbearbeitung durch Molekülschwingungen erzeugt. Üblicherweise wird die erzeugte Laserstrahlung durch eine Gasatmosphäre geführt, die mit gezielten Maßnahmen frei von Stoffen gehalten wird, welche die erzeugte Laserstrahlung absorbieren können.

Die Messung des photoakustischen Effekts ist durch L.B. Kreutzer: Laser opto-acoustic spectroscopy, A new technique of gas analysis, Anal. Chem. 46 239A, 1974, bekannt geworden.

Durch die DE 195 35 720 A1 ist ein Verfahren und eine Anordnung zur Dichtheitsprüfung von Gehäusen bekannt geworden, bei welchem ein austretendes Gas durch ein Lichtbündel einer so abgestimmten Lichtquelle beleuchtet wird, dass bei Existenz einer Undichtheit des Gehäuses der photoakustischer Effekt gemessen werden kann. Zur Verbesserung der Messung wird ein Rückkopplungskreis vorgeschlagen.

Zur Kontrolle der Gasatmosphäre ist die Verwendung eines Molekülsiebs (siehe beispielsweise EP 0 749 800) oder der Einsatz von Stickstoff als Füllgas für die Strahlführung (siehe beispielsweise WO 95/33594) bekannt.

Zum Stand der Technik gehören auch Aufwendungen oder Abschirmungen gegen einen Gaseintritt von außen.

Die CO₂-Laserstrahlung wird von vielen Molekülen mehr oder weniger stark absorbiert. Voraussetzung zur Absorption ist es, dass eine der Molekülbindungen die passende Bindungsenergie besitzt. Beispiele für solche gasförmigen Stoffe, welche von der Strahlführung ferngehalten werden müssen, sind SF₆, C₂H₄, halogenierte Kohlenwasserstoffe, Ammoniak, Alkohole, Aceton, CO₂.

Die schädigende Wirkung dieser Gase ist nicht die Absorption an sich und somit die Schwächung der zur Bearbeitung notwendigen Leistung der Laserstrahlung, sondern die auf Grund der Absorption entstehende optische Wirkung auf die Laserstrahlung, welche zu einer Strahlaufweitung und Verzerrung der Phasenfront führt. Die für die Laserbearbeitungsmaschine relevante Absorption wirkt sich nicht nennenswert leistungsschwächend aus. Der eigentlich schädliche Effekt ist die durch eine Temperaturerhöhung und durch die daraus erfolgte Änderung des Brechungsindex negative Beeinflussung der Laserstrahlung.

Untersuchungen haben ergeben, dass eine Verunreinigung von < 100 ppb (0,1 ppm) SF₆, ausreicht, welches bei 10 µm Wellenlänge die stärkste bekannte Absorption aufweist, um das Schneiden von Stahlblech mit 3 kW Laserleistung entscheidend zu beeinträchtigen.

Der Erfindung liegt die Aufgabe zu Grunde, eine Überwachung der Gasatmosphäre und sämtlicher Betriebsgase, welche mit der Laserbearbeitung in Wechselwirkung stehen, innerhalb einer Laserbearbeitungsmaschine zu ermöglichen .

Diese Aufgabe wird erfindungsgemäß durch eine Laserbearbeitungsmaschine gemäß Anspruch 1 gelöst.

Die Erfindung hat folgende Vorteile:
- Mit Hilfe des erfindungsgemäßen Messprinzips können die Moleküle gezielt detektiert werden, welche die Wellenlänge des CO₂-Lasers absorbieren.
- Genau diese störenden Moleküle beeinflussen die Bearbeitung und können frühzeitig erkannt werden.
- Mit dem Bearbeitungslaser steht ein Diagnoselaser zur Verfügung und muss nicht zusätzlich installiert werden.

In der Messzelle können bereits geringe Konzentrationen von SF₆ oder C₂H₄ nachgewiesen werden, weil eine starke Absorption einer Diagnosestrahlung von beispielsweise 10,6 µm ausgenutzt werden kann. Durch die Auskopplung der Diagnosestrahlung aus der vorhandenen Laserstrahlung zur Materialbearbeitung kann der Einsatz eines zusätzlichen Messlasers, welcher in den marktüblichen Systemen enthalten ist, entfallen. Es kann eine Echtzeitanalyse der Qualität der Gasatmosphäre in der Strahlführung bzw. der Arbeitsgase des Lasers und der Schweiß- oder Schneidgase realisiert werden.

Auf einfache Weise lässt sich die Einrichtung zur Auskopplung der Diagnosestrahlung aus der Laserstrahlung durch Mittel zur Beugung, Reflexion oder durch den Einsatz teildurchlässiger Spiegel der Laserstrahlung ausbilden, welche in eine Laseroptik der Laserbearbeitungsmaschine leicht integriert werden können.

Bevorzugt ist die Anordnung der Einrichtung zur Auskopplung der Diagnosestrahlung im Bereich eines Rückspiegels der Laserstrahlquelle der Laserbearbeitungsmaschine.

In Weiterbildung der Erfindung sind Mittel zur Erzeugung einer gepulsten Diagnosestrahlung vorgesehen. Dies ist zur Messung eines photoakustischen Effekts erforderlich. Die Erzeugung gepulster Laserstrahlung kann mechanisch oder elektronisch erfolgen.

Bei einer bevorzugten Ausführungsform der Erfindung ist eine Regeleinheit für einen Spülgaseinsatz in Abhängigkeit von dem gemessenen photoakustischen Effekt vorgesehen. Der Einsatz von Spülgas muss nur bei Bedarf erfolgen. Der N₂-Verbrauch kann reduziert werden. Bevorzugt ist eine Regelung der Durchflussrate der Gase der Laserbearbeitungsmaschine, indem bei Verunreinigung der Zuleitung oder der Laserstrahlführung durch einen erhöhten Durchfluss eine Reinigung der Zuleitung oder der Laserstrahlführung durch die Zu- oder Durchströmung mit möglichst reinen Gasen erfolgt.

Zur Vereinfachung des Aufbaus der Laserbearbeitungsmaschine ist es vorteilhaft, wenn eine gemeinsame Messzelle zur Analyse unterschiedlicher Gase der Laserbearbeitungsmaschine, insbesondere von Versorgungsgasen des Lasers und/oder der Laserbearbeitungsmaschine, von Schneidgasen und/oder Arbeitsgasen, vorgesehen ist.

Vorteilhaft ist es, die Messung des photoakustischen Effekts zur Steuerung der Laserbearbeitungsmaschine einzusetzen, indem eine Geschwindigkeitsreduktion ("Notlauf") der Bearbeitung oder ein Abbruch der Bearbeitung ("Stop") in Abhängigkeit von dem gemessenen photoakustischen Effekt erfolgt. Eine fehlerhafte Bearbeitung wird rechtzeitig unterbrochen.

Ein bevorzugtes Ausführungsbeispiel der Erfindung ist in der Zeichnung schematisch dargestellt und wird nachfolgend mit Bezug zur Figur der Zeichnung näher erläutert. Es zeigt:
- **Fig.1**: eine Prinzipdarstellung einer Anordnung zur Analyse eines gasförmigen Mediums im Bereich einer Laserbearbeitungsmaschine;
- **Fig. 2**: eine Prinzipdarstellung einer Laserbearbeitungsmaschine;
- **Fig. 3**: eine Prinzipdarstellung der Regelung.

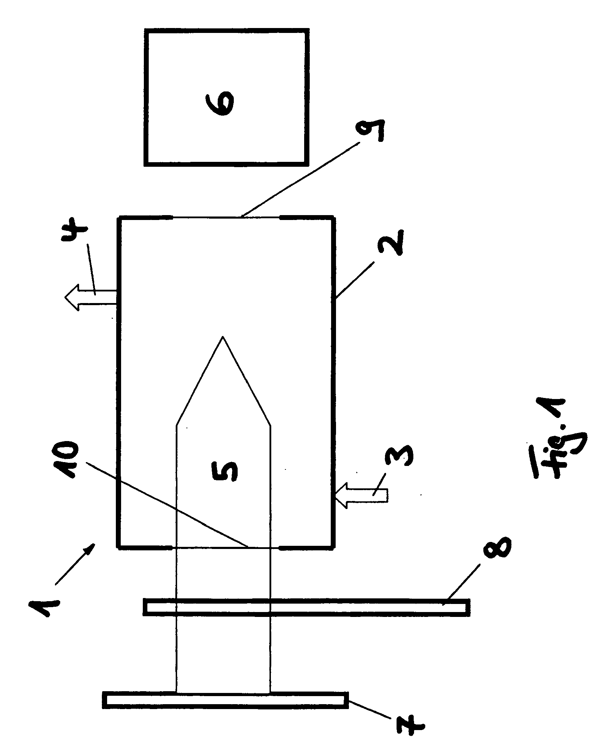

Aus der **Fig. 1** ist eine Anordnung **1** mit einer gasdichten Messzelle **2** ersichtlich, in welche eine zu analysierende Gasatmosphäre mittels eines Gaseinlasses **3** und eines Gasauslasses **4** ein- und ausströmen kann. Das Gas wird mittels einer Vakuumpumpe eingesaugt. Auf Grund der erforderlichen Reinheit muss die Messleitung und die Messzelle 2 evakuiert sein. Zur Analyse des Gases wird eine Diagnosestrahlung **5** eines nicht dargestellten CO₂-Lasers der Laserbearbeitungsmaschine mit einer Wellenlänge von etwa 10 µm durch die Messzelle 2 gelenkt.

Wenn Gasmoleküle, z. B. SF₆, einen Teil der Diagnosestrahlung 5 absorbieren, wird die absorbierte Energie in Form von kinetischer und damit thermischer Energie anschließend wieder abgegeben. Diese Energieabgabe führt zu einer messbaren Druckänderung, welche mit Hilfe eines Schalldetektors - ein empfindliches Mikrophon - nachgewiesen werden kann (photoakustischer Effekt, siehe auch L.B. Kreutzer: Laser opto-acoustic spectroscopy, A new technique of gas analysis, Anal. Chem. 46 239A, 1974). Wird nun das in der Messzelle 2 befindliche Gas systematisch mit der gepulsten Diagnosestrahlung 5 bestrahlt und befinden sich absorbierende Moleküle in der Gasatmosphäre, so können diese während der Messung einen Teil der Diagnosestrahlung für einen kurzen Zeitraum aufnehmen, so dass eine durch die Absorption erzeugte Druckänderung über einen Schalldetektor registriert und mittels elektronischer Signalverarbeitungsverfahren ausgewertet werden kann.

Zur Erzeugung der Diagnosestrahlung 5 wird mit Hilfe eines Rückspiegels **7** und eines Chopperrades **8** ein kleiner Teil der an sich zur Materialbearbeitung eines Werkstücks zur Verfügung stehenden Leistung des CO₂-Lasers ausgekoppelt. Zur Erzeugung eines gepulsten Laserstrahls für die Diagnosestrahlung 5 wird das Chopperrad 8 (mechanischer Strahlzerhacker) eingesetzt. Alternativ kann der Laser in Bearbeitungspausen definiert gepulst werden, ggf. können zwei bis drei gezielte Messfrequenzen erzeugt werden. Es werden 10 bis 20 W der vorzugsweise am Rückspiegel 7 einer Strahlquelle auftreffenden Laserstrahlung des CO₂-Lasers verwendet. Etwa 0,2 bis 1% der Laserleistung wird zur Gasanalyse ausgekoppelt. Die Diagnosestrahlung 5 wird durch die Messzelle 2 geleitet, in welcher sich der Schalldetektor befindet. Am gegenüberliegenden Ende der Messzelle 2 sitzt ein Leistungsmesskopf **6** hinter einem Fenster **9** zur Messung der eingestrahlten Laserleistung.

Zur Auskopplung der Diagnoseleistung 5 kann auch ein beliebig teildurchlässiger Umlenkspiegel der Strahlführung des CO₂-Lasers eingesetzt werden. Ebenso kann die Diagnosestrahlung 5 durch Reflektion oder Beugung aus dem Bearbeitungsstrahl des CO₂-Lasers herausgeführt und in die Messzelle 2 durch ein Fenster **10** eingestrahlt werden.

Die Anordnung 1 kann an einer an sich bekannten und daher nicht gezeigten Laserbearbeitungsmaschine fest installiert werden, z.B. als eine Diagnoseeinheit. Die Anordnung 1 kann auch als nachrüstbares Diagnose-Modul vorgesehen und zusätzlich an einer bestehenden Laserbearbeitungsmaschine angebracht werden. Es ist weiterhin möglich, die Anordnung 1 kurzzeitig an die Laserbearbeitungsmaschine für Messungen oder Analysen anzuschließen. Mit Hilfe der Anordnung 1 kann die Qualität einer Gasatmosphäre innerhalb der Läserbearbeitungsmaschine (durch eine Vakuumpumpe angesaugt) zyklisch gemessen werden: Luft oder Stickstoff in der Strahlführung, Schneid-, Schweiß- oder Schutzgas für die Materialbearbeitung, Laserbetriebsgase. Mögliche Probleme bei der Materialbearbeitung in Folge einer Beeinflussung der Laserstrahlung durch verunreinigte Gase können präventiv unterbunden werden.

Weiterhin kann die Gasatmosphäre im Strahlengang auf Ihre Reinheit hin geregelt werden. Das Spülgas (Stickstoff) muss nicht ständig durchgeblasen werden, sondern nur noch bei Bedarf.

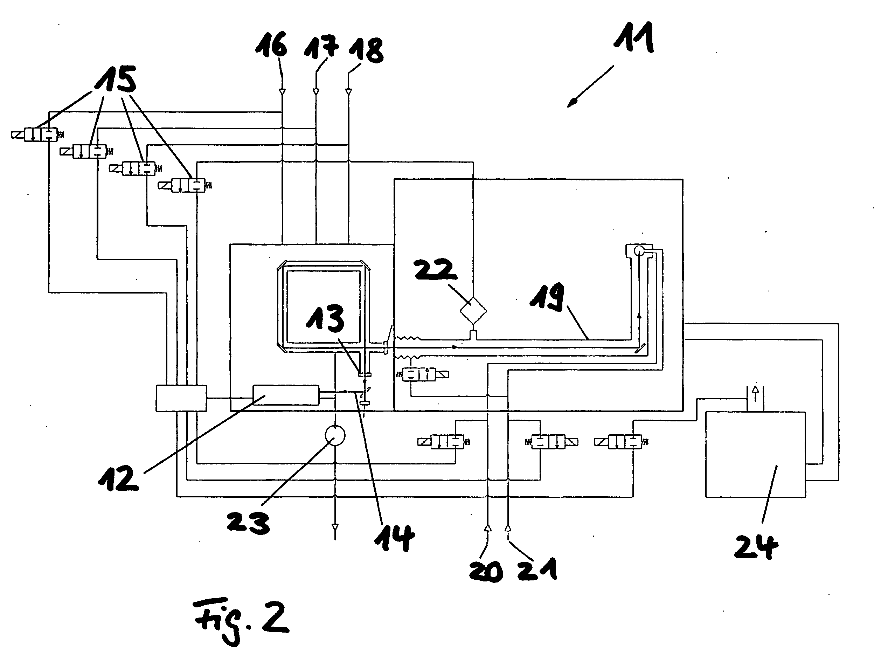

Bei einer Laserbearbeitungsmaschine **11** gemäß **Fig. 2** ist eine einzige Messzelle **12** zur Überprüfung der Gaszusammensetzung in den Zuleitungen der Versorgungsgase, der Schneid- und Arbeitsgase und der Gase in der Strahlführung vorgesehen. Der an einem Rückspiegel **13** austretende, einem Leistungsmesskopf 14 zugeführte Laserstrahl **14** wird als Diagnosestrahl in die Messzelle 12 gelenkt. Mit Hilfe einer Multiplexerschaltung und Ventilen **15** werden der Messzelle 12 wahlweise zu untersuchende Gase zugeführt. Dies können Gase aus Zuleitungen für Versorgungsgase des Lasers, d. h. aus einer Zuleitung **16** (CO₂), **17** (N₂) und **18** (He) sein. Auch die Gasatmosphäre in einer Strahlführung **19,** in welche Schneid- und Arbeitsgase über eine Zuleitung **20** (O₂) und eine Zuleitung **21** (N₂) geleitet werden, kann überprüft werden, da ein Gasaustritt **22,** eine Zuleitung zur Messzelle 12 und ein Ventil 15 in der Zuleitung vorgesehen sind. Der Messzelle 12 ist eine Vakuumpumpe **23** zur Evakuierung der Messzelle 12 zugeordnet.

Denkbar ist auch eine Rückführung der Gase nach dem Gasaustritt 22 in die Strahlführung 19.

Eine Absaugung **24** mit einem Filter für die Gase der Laserbearbeitungsmaschine 11 komplettieren die Laserbearbeitungsmaschine 11. Wird Kunststoff geschnitten und mit einem Aktivkohlefilter gearbeitet, so kann die Filterwirkung mit Hilfe der Anordnung zur Gasanalyse (Messzelle, Sensor) überwacht und ein Warnsignal erzeugt werden, wenn die Aktivkohle belegt und die Adsorption unzureichend ist.

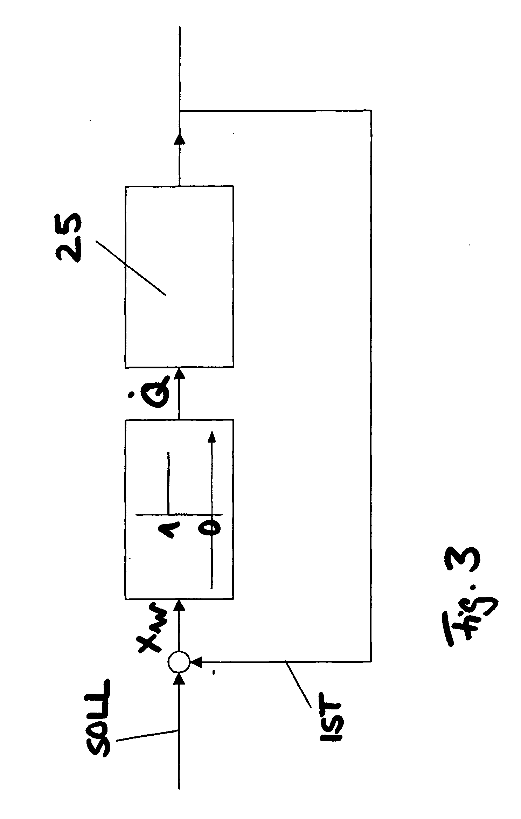

**Fig. 3** veranschaulicht eine Regelung der Gasströmung der Arbeits- und Schneidgase, indem das Gasvolumen **25** in der Strahlführung 19 auf Absorption der Diagnosestrahlung kontrolliert wird. Ein Vergleich zwischen Ist- und Sollwert hat zur Folge, dass bei Überschreitung eines Grenzwertes X_{w} die Durchflussrate Q der Arbeits- und Schneidgase bei Absorption erhöht wird, um die störenden Gasmoleküle durch nachströmende Gasmoleküle der Arbeits- oder Schneidgase zu ersetzen. Das Spülgas (Stickstoff) muss beispielsweise nicht mit hoher Strömungsrate ständig durchgeblasen werden, sondern nur noch bei Bedarf.

### BEZUGSZEICHENLISTE

- **1**: Analyseanordnung
- **2**: Messzelle
- **3**: Gaseinlass
- **4**: Gasauslass
- **5**: Diagnosestrahlung
- **6**: Messkopf
- **7**: Rückspiegel
- **8**: Chopperrad
- **9**: Fenster der Messzelle
- **10**: Fenster der Messzelle
- **11**: Laserbearbeitungsmaschine
- **12**: Messzelle
- **13**: Rückspiegel
- **14**: Laserstrahl
- **15**: Ventil
- **16**: Zuleitung
- **17**: Zuleitung
- **18**: Zuleitung
- **19**: Strahlführung
- **20**: Zuleitung
- **21**: Zuleitung
- **22**: Gasaustritt
- **23**: Vakuumpumpe
- **24**: Absaugung
- **25**: Gasvolumen

## Patentansprüche

1. Laserbearbeitungsmaschine (11) mit einer zur Materialbearbeitung eines Werkstücks vorgesehenen Laserstrahlung vorzugsweise eines CO2-Lasers mit einer Messzelle (2; 12), in welche ein zu analysierendes Gas der Laserbearbeitungsmaschine, insbesondere ein Versorgungsgas des Lasers und/oder der Laserbearbeitungsmaschine (11) oder ein Schneidgas und/oder ein Arbeitsgas, einströmen kann, **dadurch gekennzeichnet, dass** sie mit einer Einrichtung (7) zur Auskopplung einer Diagnosestrahlung (5; 14) aus der Laserstrahlung und mit einem Schalldetektor zur Erfassung des in der Messzelle (2; 12) nach Absorption der Diagnosestrahlung (5; 14) entstehenden sog. photo-akustischen Effekts versehen ist.

2. Laserbearbeitungsmaschine nach Anspruch 1, **dadurch gekennzeichnet, dass** die Einrichtung zur Auskopplung der Diagnosestrahlung (5; 14) aus der Laserstrahlung Mittel zur Beugung der zur Leistungsmessung genutzten Laserstrahlung umfasst.

3. Laserbearbeitungsmaschine nach Anspruch 1, **dadurch gekennzeichnet, dass** die Einrichtung zur Auskopplung der Diagnosestrahlung (5; 14) aus der Laserstrahlung Mittel zur Reflexion der zur Leistungsmessung genutzten Laserstrahlung umfasst.

4. Laserbearbeitungsmaschine nach Anspruch 1, **dadurch gekennzeichnet, dass** die Einrichtung zur Auskopplung der Diagnosestrahlung (5; 14) aus der Laserstrahlung einen teildurchlässigen Spiegel der zur Leistungsmessung genutzten Laserstrahlung verwendet.

5. Laserbearbeitungsmaschine nach Anspruch 4, **dadurch gekennzeichnet, dass** der teildurchlässige Spiegel der Rückspiegel (13) der Strahlquelle ist.

6. Laserbearbeitungsmaschine nach einem der vorhergehenden Ansprüche, **dadurch gekennzeichnet, dass** mechanische Mittel zur Erzeugung einer gepulsten Diagnosestrahlung vorgesehen sind.

7. Laserbearbeitungsmaschine nach einem Ansprüche 1 bis 5, **dadurch gekennzeichnet, dass** elektronische Mittel zur Erzeugung einer gepulsten Diagnosestrahlung vorgesehen sind.

8. Laserbearbeitungsmaschine nach einem der vorhergehenden Ansprüche, **dadurch gekennzeichnet, dass** eine Regeleinheit für einen Spülgaseinsatz in Abhängigkeit von dem gemessenen photoakustischen Effekt vorgesehen ist.

9. Laserbearbeitungsmaschine nach Anspruch 8, **dadurch gekennzeichnet, dass** die Regeleinheit zur Regelung der Durchflussrate eines oder mehrerer Versorgungsgase des Lasers und/oder der Laserbearbeitungsmaschine und von Arbeits- oder Schneidgasen in Abhängigkeit von der Analyse der Gasatmosphäre in den Zuleitungen oder in der Laserstrahlführung ausgebildet ist.

10. Laserbearbeitungsmaschine nach einem der vorhergehenden Ansprüche, **dadurch gekennzeichnet**, eine gemeinsame Messzelle (12) zur Analyse unterschiedlicher Gase der Laserbearbeitungsmaschine (11), insbesondere von Versorgungsgasen des Lasers und/oder der Laserbearbeitungsmaschine (11), von Schneidgasen und/oder Arbeitsgasen, vorgesehen ist.

11. Laserbearbeitungsmaschine nach einem der vorhergehenden Ansprüche mit einem Filter, insbesondere Aktivkohlefilter, **dadurch gekennzeichnet, dass** die Anordnung zur Gasanalyse (Messzelle, Sensor) auch zur Überwachung der Filterwirkung einsetzbar ist.

## Claims

1. Laser processing machine (11) comprising laser radiation, preferably of a CO₂ laser, provided for material processing of a workpiece, with a measuring cell (2; 12) into which gas, to be analyzed, of the laser processing machine can flow, in particular a supply gas of the laser and/or of the laser processing machine (11), or a cutting gas and/or a working gas, **characterized in that** it is provided with a means (7) for decoupling diagnostic radiation (5; 14) from the laser radiation, and with a sound detector for detecting the so-called photo-acoustical effect that is generated in the measuring cell (2; 12) after absorption of the diagnostic radiation (5; 14).

2. Laser processing machine according to claim 1, **characterized in that** the means for decoupling the diagnostic radiation (5; 14) from the laser radiation comprises means for diffracting the laser radiation used for power measurement.

3. Laser processing machine according to claim 1, **characterized in that** the means for decoupling the diagnostic radiation (5; 14) from the laser radiation comprises means for reflecting laser radiation used for power measurement.

4. Laser processing machine according to claim 1, **characterized in that** the means for decoupling the diagnostic radiation (5; 14) from the laser radiation utilizes a partially transparent mirror for the laser radiation used for power measurement.

5. Laser processing machine according to claim 4, **characterized in that** the partially transparent mirror is the rear mirror (13) of the radiation source.

6. Laser processing machine according to any one of the preceding claims, **characterized in that** mechanical means are provided for generating a pulsed diagnostic radiation.

7. Laser processing machine according to any one of the claims 1 through 5, **characterized in that** electronic means are provided for generating a pulsed diagnostic radiation.

8. Laser processing machine according to any one of the preceding claims, **characterized in that** a control unit is provided for using rinsing gas in response to the measured photo-acoustical effect.

9. Laser processing machine according to claim 8, **characterized in that** the control unit is designed for controlling the flow rate of one or more supply gases of the laser and/or of the laser processing machine, and of working or cutting gases in response to the analysis of the gas atmosphere in the feed lines or in the laser beam guidance.

10. Laser processing machine according to any one of the preceding claims, **characterized in that** a common measuring cell (12) is provided for analyzing different gases of the laser processing machine (11), in particular, supply gases of the laser and/or the laser processing machine (11), cutting gases and/or working gases.

11. Laser processing machine according to any one of the preceding claims comprising a filter, in particular an activated carbon filter, **characterized in that** the configuration for gas analysis (measuring cell, sensor) can also be used to monitor the filter effect.

## Revendications

1. Machine d'usinage au laser (11) avec un rayonnement laser, de préférence d'un laser au CO₂, prévu pour l'usinage de matériau d'une pièce, avec une cellule de mesure (2;12) dans laquelle un gaz à analyser de la machine d'usinage au laser, en particulier un gaz d'alimentation du laser et/ou de la machine d'usinage au laser (11) ou un gaz de coupe et/ou un gaz de travail peut entrer, **caractérisée en ce qu'**elle est pourvue d'un dispositif (7) pour extraire un rayonnement de diagnostic (5 ; 14) du rayonnement laser et d'un détecteur acoustique pour saisir l'effet dit photoacoustique qui se manifeste dans la cellule de mesure (2 ;12) après absorption du rayonnement de diagnostic (5 ; 14).

2. Machine d'usinage au laser selon la revendication 1, **caractérisée en ce que** le dispositif pour extraire le rayonnement de diagnostic (5 ; 14) du rayonnement laser comprend des moyens pour diffracter le rayonnement laser utilisé pour la mesure de puissance.

3. Machine d'usinage au laser selon la revendication 1, **caractérisée en ce que** le dispositif pour extraire le rayonnement de diagnostic (5 ; 14) du rayonnement laser comprend des moyens pour réfléchir le rayonnement laser utilisé pour la mesure de puissance.

4. Machine d'usinage au laser selon la revendication 1, **caractérisée en ce que** le dispositif pour extraire le rayonnement de diagnostic (5; 14) du rayonnement laser utilise un miroir semi-transparent du rayonnement laser utilisé pour la mesure de puissance.

5. Machine d'usinage au laser selon la revendication 4, **caractérisée en ce que** le miroir semi-transparent est le miroir arrière (13) de la source de rayonnement.

6. Machine d'usinage au laser selon l'une des revendications précédentes, **caractérisée en ce qu'**il est prévu des moyens mécaniques pour générer un rayonnement de diagnostic pulsé.

7. Machine d'usinage au laser selon l'une des revendications 1 à 5, **caractérisée en ce qu'**il est prévu des moyens électroniques pour générer un rayonnement de diagnostic pulsé.

8. Machine d'usinage au laser selon l'une des revendications précédentes, **caractérisée en ce qu'**il est prévu une unité de régulation pour une utilisation de gaz de balayage en fonction de l'effet photoacoustique mesuré.

9. Machine d'usinage au laser selon la revendication 8, **caractérisée en ce que** l'unité de régulation est conçue pour réguler le débit d'un ou plusieurs gaz d'alimentation du laser et/ou de la machine d'usinage au laser et de gaz de travail ou de coupe en fonction de l'analyse de l'atmosphère gazeuse dans les conduites d'alimentation ou dans le guide de faisceau laser.

10. Machine d'usinage au laser selon l'une des revendications précédentes, **caractérisée en ce qu'**il est prévu une cellule de mesure (12) commune pour analyser différents gaz de la machine d'usinage au laser (11), en particulier des gaz d'alimentation du laser et/ou de la machine d'usinage au laser (11), des gaz de coupe et/ou des gaz de travail.

11. Machine d'usinage au laser selon l'une des revendications précédente avec un filtre, en particulier un filtre à charbon actif, **caractérisée en ce que** le dispositif d'analyse de gaz (cellule de mesure, capteur) est utilisable aussi pour surveiller l'effet de filtration.
